# EUROPEAN PATENT SPECIFICATION

(11) **EP 0 734 695 B1**
(45) Date of publication and mention of the grant of the patent: **30.01.2002**
(21) Application number: 96830150.7
(22) Date of filing: 26.03.1996
(51) Int. Cl.: A61G 15/16, A61C 19/00, B25G 3/18

(54) **Detachable handle**
Lösbarer Handgriff
Poignée amovible

(30) Priority: 27.03.1995 IT BO950136
(43) Date of publication of application: 02.10.1996
(73) Proprietor: CASTELLINI S.p.A., I-40013 Castel Maggiore (Bologna) (IT)
(72) Inventor: Castellini, Franco, 40123 Bologna (IT)
(74) Representative: Lanzoni, Luciano

(56) References cited:
- WO-A-92/08391
- US-A- 4 806 100
- US-A- 4 993 057

## Description

The present invention relates to a handle for dental equipment such as handpiece holders or tablets forming part of dental units.

It is known that medical equipment often presents handles that can be removed to be sterilized.

In particular DOC.US 4993057 shows the handle of a X-ray machine that is screwed in the X-ray tube head assembly. Said handle can be removed from the machine by screwing it off.

Recent advances in technological development for controlling and driving the equipment in dental units have made it possible to fit dental units with a wide variety of devices, including mechanical ones, designed to improve the safety and standard of hygiene of the dental units. One such device permits the rapid connection and disconnection of parts such as the tablet handle which, during use, is in continuous contact with the dental surgeon's hand and therefore likely to become contaminated by bacteria.

This device enables the dental surgeon to easily remove the handle so that it can be autoclaved at the end of each day or after particularly delicate treatment sessions, thus improving the overall safety and hygiene of the dental unit.

For this reason, the Applicant has created a detachable handle, to be used in combination with the latest generation of dental units and having a safe, practical structure that does not interfere with the rest of the equipment to which it is applied.

The technical characteristics of the invention to achieve the aforestated aims are laid out in the claims below and the advantages of the disclosure are apparent from the detailed description which follows, with reference to the accompanying drawings, which illustrate a preferred embodiment of the invention by way of example and in which:
- Fig. 1 is a side view, with some parts cut away in order to better illustrate others, of a part of a handpiece tablet fitted with the detachable handle disclosed by the present invention;
- Fig. 2 is a front view of the handle shown in Fig. 1 with some parts cut away in order to better illustrate others;
- Fig. 3 is a perspective view, with some parts cut away in order to better illustrate others, of the inside of a tablet fitted with a locking device for the handle shown in the previous drawings;
- Figs. 4 and 5 show two possible shapes of a pin on the detachable handle disclosed by the present invention.

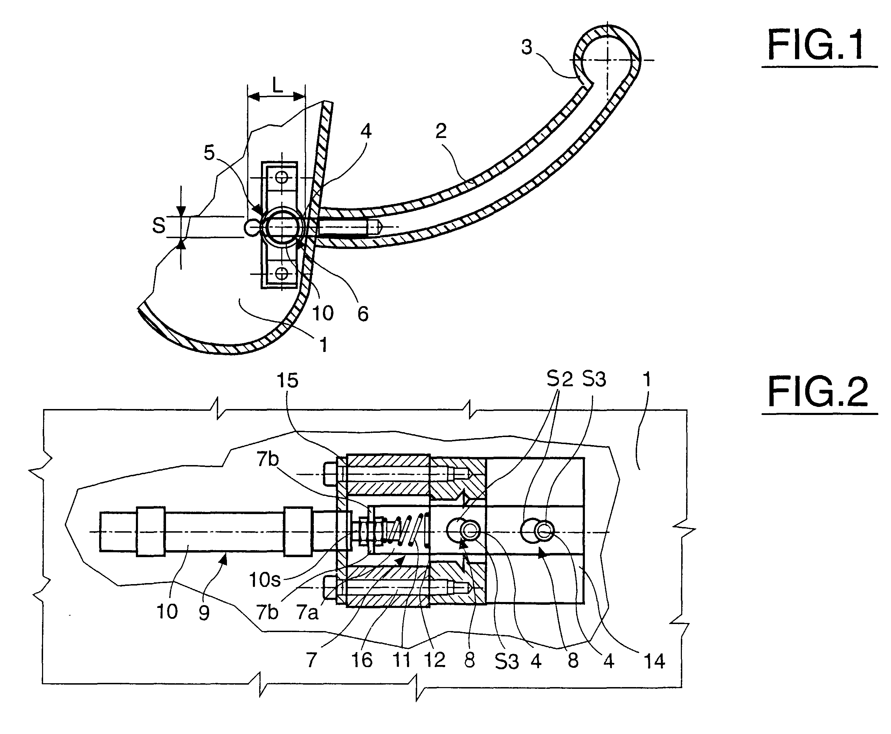

With reference to the accompanying drawings, in particular Fig. 1, the handle disclosed forms part of a tablet for holding handpieces 1 on a dental unit.

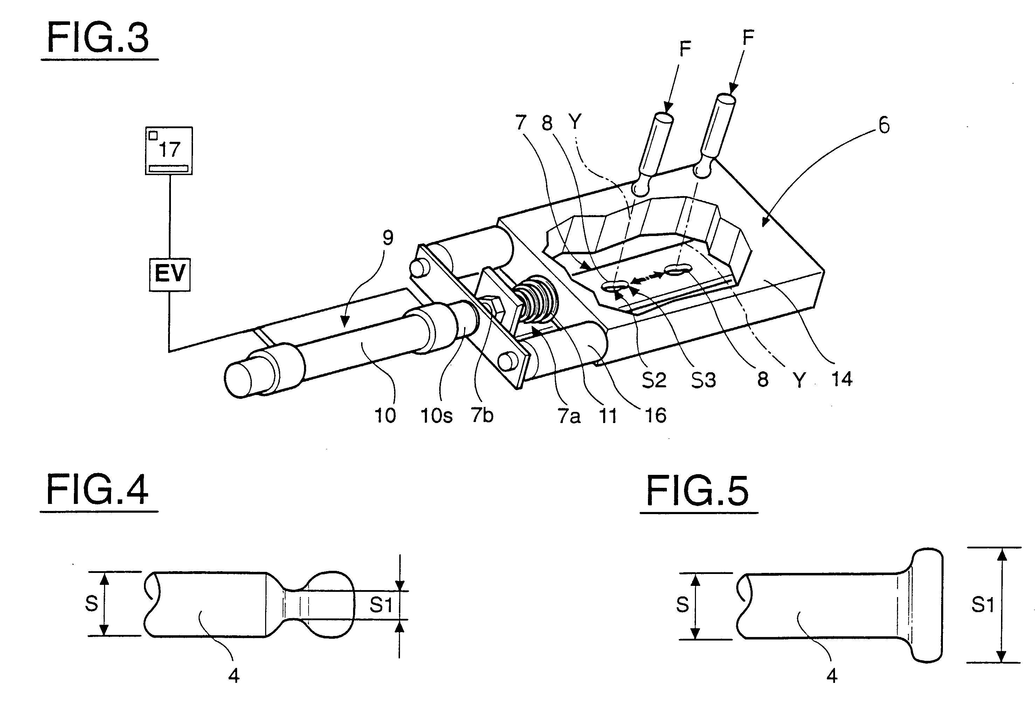

This handle basically comprises a first arm 2 that can be attached to the tablet 1 and a second arm 3 constituting the handgrip used by the dental surgeon: the lower end of the first arm 2 has protruding from it one or more pins 4, which, in the embodiment illustrated, are cylindrical and two in number, each having thickness S and length L Each pin comprises section (5) having a cross-section area (S1) different than the cross section of the rest of the pin, the area of the cross section of the rest of the pin being constant; As can be clearly seen in Figs. 4 and 5, the section 5 defines a neck whose thickness S1 is less than the thickness S of the pin 4 and which is made near the end of the pin; instead, in Fig. 5, the section 5 forms a head made on the end of the pin 4 and having a thickness S1 greater than the thickness S of the rest of the pin 4.

In the tablet 1 there are sockets 6 which are openended to receive the pins 4 and whose width (which, in the embodiment illustrated is the diameter) corresponds to the thickness S of the pins 4 but which are shorter than the length L of the pins 4.

Each socket has inside it, or at the back of it, a locking element consisting of a plate 7 with two slots 8 in it, each slot having a first and a second portion labelled S2 and S3 in Figs. 2 and 3, corresponding to the thicknesses S and S1 of the pins 4.

The locking plate 7 has means 9 to slide it transversally with respect to an axis Y of the sockets 6: the plate 7 therefore moves from a pins 4 locked position (shown by the unbroken line in Fig. 2), in which the slots 8 are coaxial with the pins 4 inside the second portions S3 corresponding to the thickness S1 of the section 5 of the pins, to a pins 4 unlocked position (illustrated in Fig. 2 by the plate 7 shown by the broken line) in which the slots 8 are coaxial with the pins 4 inside the second portions S2 corresponding to the thickness S of the pins 4.

Looking in more detail (see Fig. 3), the plate 7 is in the shape of an "L" in whose large arm 7a the slots 8 are made, whilst the small arm 7b is connected to a pneumatic piston 10, which defines the means 9 which slide the plate, and is located parallel to the large arm 7a of the place 7.

In addition to these elements, there is a spring 11 between the stem of piston 10 and a stop surface 12 opposite the piston 10: the spring 11 keeps the plate 7 in the said pins 4 locked position when the piston 10 is not activated.

As shown in Fig. 3, the stop surface 12 forms part of a block 14 which defines the central body of the locking system for the pins 4: in practice, part of the sockets 6 for the pins 4 are made in the block 14, placed against the vertical surface inside the tablet 1, and the sliding plate 7 with the slots is placed behind the block, with respect to the direction (labelled F in Fig. 3) in which the pins 4 are slotted into the sockets. The piston 10 is placed on the side of the block 14 and is mounted by a rigid surface 15 which is in turn attached through a pair of cylinders 16 located on opposite sides of the piston 10 and fixed to the aforesaid stop surface 12 of the block 14.

The piston 10 is controlled by activation means 13, fitted to the exterior of the tablet and consisting usually of a selector switch 17 placed on control consoles of known kind which dental units are currently fitted with.

In a possible embodiment, mentioned by way of example only, the selector switch 17 is used to turn on the solenoid valve EV which controls the pneumatic system of the piston 10.

Therefore, a handle made in accordance with the present invention can be unlocked from, or locked to, the tablet by a simple command given from the control console to activate the piston 10 and hence the plate 7.

In practice, starting from a condition in which the pins 4 on the first arm 2 are inside the sockets 6 and locked by the plate 7 by means of the slots 8 whose second portions S3 are coupled to the sections S1 of the pins 4, the dental surgeon switches on the selector switch 17 which sends an activation pulse to the solenoid valve EV. The solenoid valve opens the pneumatic circuit of the piston 10 whose stem 10s moves forward and slides the plate 7 in the direction indicated by F1. The sliding motion moves the slots 8 so that the first portions S2 are coaxial with the corresponding pins 4 and so that the latter can be pulled out of the sockets 6.

The aims of the present invention are thus achieved by a handle structured in the manner described above, thanks to its simple lock/unlock mechanism which does not encumber the handpiece tablet and, at the same time, can be rapidly removed by the dental surgeon, an operation which was not always possible on previous dental units, by simply switching on a selector switch.

The invention described can be subject to modifications and variations without thereby departing from the scope of the inventive concept. Moreover, all the details of the invention may be substituted by technically equivalent elements.

## Claims

1. A handle with a tablet for holding handpieces (1) forming part of dental units comprising at least one arm (2) that can be attached to said tablet and a second arm (3) constituting the handgrip, the said first arm (2) having, protruding from its lower end, at least one pin (4) having a thickness (S) and a length (L), the said tablet (1) having a socket (6) which is open-ended to receive the pin (4) and with thickness corresponding to that of the pin (4) but shorter than the length (L), the said socket (6) having inside it, or at the side opposite to the open-ended side, a locking element, said handle being **characterized in that** the pin comprises a section (5) having a thickness (S1) and a cross-section area, said cross-section area being different than the cross section of the rest of the pin having thickness (S) and constant cross section area; said locking element consisting of a plate (7) with a slot (8) in it having a first and a second eye (S2, S3) corresponding to the aforesaid thicknesses (S,S1) and said cross-section area, the tablet further comprising means (9) adapted to slide the plate (7) transversally with respect to an axis (Y) of the Socket (6) from a pin (4) locked position in which the slot (8) is coaxial with the pin (4) inside the second eye (S3) corresponding to the said cross section area of said section (S) of the pin, to an unlocked position of the pin (4) in which the slot (8) is coaxial with the pin (4) inside the first eye (S2) corresponding to the thickness (S) of the pin (4).

2. The device according to claim 1, **characterized in that** the section (5) defines a neck whose said cross section area is less than the thickness (S) of the pin (4) and which is made near the end of the pin (4) itself.

3. The device according to claim 1, **characterized in that** the section (5) forms a head made on the end of the pin (4) and having a cross section area greater than the thickness (S) of the rest of the pin (4).

4. The device according to claim 1, **characterized in that** the said plate (7) is in the shape of an "L" in whose large arm (7a) the slot (8) is made, whilst the small arm (7b) is connected to a pneumatic piston (10), which defines the means (9) for sliding the plate (7), and is located parallel to the plate (7); means (11) being provided between the piston (10) and a stop surface (12) opposite the piston (10) to keep the plate (7) in the said pin (4) locked position when the piston (10) is not activated.

5. The device according to claim 1 **characterized in that** the said drive means (9) are controlled by activation means (13) fitted to the exterior of the tablet (1).

6. The device according to claim 1 **characterized in that** the said first arm (2) has two cylindrical pins (4) and said plate (7) has corresponding slots (8).

## Patentansprüche

1. Griff mit einem Tablett (1) zum Halten von Handstücken, welche Teil von Dentaleinheiten bilden, enthaltend wenigstens einen Arm (2), der an dem genannten Tablett angebracht werden kann, und einen den Griff bildenden zweiten Arm (3), wobei der genannte erste Arm (2) an seinem unteren Ende herausragend wenig-stens einen Zapfen (4) aufweist, der eine Stärke (S) und eine Länge (L) hat, wobei das genannte Tablett (1) einen oben offenen Sitz (6) enthält, um den Zapfen (4) aufzunehmen, und der eine Weite hat, die der Stärke des Zapfens (4) entspricht, jedoch kürzer ist als die Länge (L), wobei der genannte Sitz (6) im Inneren oder an der Seite, die der Seite mit dem offenen Ende gegenüberliegt, ein Blockierelement aufweist, wobei der genannte Griff **dadurch gekennzeichnet ist, dass** der Zapfen einen Abschnitt (5) mit einer Stärke (S1) und einen Querschnittbereich enthält, wobei der genannte Querschnittbereich unterschiedlich von dem Querschnittbereich des restlichen Zapfens ist, welcher eine Stärke (S) und einen konstanten Querschnittbereich aufweist; wobei das genannte Blockierelement aus einer Platte. (7) mit einem Schlitz (8) besteht, welcher eine erste und eine zweite Weite (S2, S3) hat, entsprechend der vorgenannten Stärke (S, S1) und dem genannten Querschnittbereich, und wobei das Tablett ausserdem wie folgt enthält: Mittel (9), geeignet zum Verschieben der Platte (7) quer im Verhältnis zu einer Achse (Y) des Sitzes (6) von einer Blockierposition des Zapfens (4), in welcher der Schlitz (8) koaxial zu dem Zapfen (4) im Inneren der zweiten Weite (S3) angeordnet ist, entsprechend dem genannten Querschnittbereich des genannten Abschnittes (S) des Zapfens, in eine Freigabeposition des Zapfens (4), in welcher der Schlitz (8) koaxial zu dem Zapfen im Inneren der ersten Weite (S2) angeordnet ist, entsprechend der genannten Stärke (S) des Zapfens (4).

2. Vorrichtung nach Patentanspruch 1, **dadurch gekennzeichnet, dass** der Abschnitt (5) einen Hals beschreibt, dessen genannter Querschnittbereich geringer ist als die Stärke (S) des Zapfens (4), und welcher sich in der Nähe des Endes des Zapfens (4) selbst befindet.

3. Vorrichtung nach Patentanspruch 1, **dadurch gekennzeichnet, dass** der Abschnitt (5) am Ende des Zapfens (4) einen Kopf bildet, welcher einen Querschnittbereich hat, der grösser ist als die Stärke (S) des restlichen Zapfens (4).

4. Vorrichtung nach Patentanspruch 1, **dadurch gekennzeichnet, dass** die genannte Platte (7) die Form eines "L" hat, in deren grösseren Arm (7a) der Schlitz (8) eingearbeitet ist, während der kleinere Arm (7b) an einen Druckluftkolben (10) angeschlossen ist, welcher die Mittel (9) zum Verschieben der Platte (7) beschreibt und parallel zu der Platte (7) angeordnet ist; wobei Mittel (11) zwischen dem Kolben (10) und einer Anschlagfläche (12) gegenüber dem Kolben (10) vorgesehen sind, um die Platte (7) in der genannten Blockierposition des Zapfens (4) zu halten, wenn der Kolben (10) nicht aktiviert ist.

5. Vorrichtung nach Patentanspruch 1, **dadurch gekennzeichnet, dass** die genannten Antriebsmittel (9) durch die Aktiviermittel (13) gesteuert werden, die aussen an dem Tablett (1) angeordnet sind.

6. Vorrichtung nach Patentanspruch 1, **dadurch gekenn** **zeichnet**, dass der genannte erste Arm (2) zwei zylindrische Zapfen (4) aufweist und die genannte Platte (7) entsprechende Schlitze (8) hat.

## Revendications

1. Une poignée avec une tablette de support de pièces à main (1) faisant partie d'une unité dentaire, qui comprend au moins un premier bras (2) pouvant être fixé à ladite tablette et un second bras (3) constituant la poignée, ledit premier bras (2) étant doté à son extrémité inférieure d'au moins une broche (4) en saillie d'épaisseur (S) et de longueur (L) et ladite tablette (1) présentant une emboîture (6), avec une ouverture d'épaisseur comparable à celle de la broche (4) mais plus courte que la longueur (L), destinée à recevoir la broche (4) et contenant un élément de verrouillage à l'intérieur ou du côté opposé à l'ouverture, ladite poignée étant **caractérisée en ce que** la broche (4) comprend une portion (5) d'épaisseur (S1) et de section différente de celle du reste de la broche qui a une épaisseur (S) et une section constante ; ledit élément de verrouillage consistant en une plaque (7) avec une fente (8) présentant un premier et un second oeillets (S2, S3) d'épaisseur comparable auxdites épaisseurs (S, S1) et à ladite section, la tablette comprenant également des moyens (9) en mesure de déplacer la plaque (7) transversalement par rapport à un axe (Y) de l'emboîture (6) entre une position de verrouillage de la broche (4) où la fente (8) est coaxiale à la broche (4) à l'intérieur du second oeillet (S3) correspondant à ladite section de ladite portion (5) de la broche, et une position de déverrouillage de la broche (4) où la fente (8) est coaxiale à la broche (4) à l'intérieur du premier oeillet (S2) d'épaisseur comparable à l'épaisseur (S) de la broche (4).

2. Le dispositif selon la revendication 1, **caractérisé en ce que** la portion (5) définit un collet de section inférieure à l'épaisseur (S) de la broche (4) et situé près de l'extrémité de ladite broche (4).

3. Le dispositif selon la revendication 1, **caractérisé en ce que** la portion (5) définit une tête située à l'extrémité de la broche (4) et de section supérieure à l'épaisseur (S) du reste de la broche (4).

4. Le dispositif selon la revendication 1, **caractérisé en ce que** ladite plaque (7) est en forme de "L", dont la branche la plus longue (7a) présente la fente (8), tandis que la branche la plus courte (7b) est reliée à un piston pneumatique (10) qui est parallèle à la plaque (7) et constitue les moyens (9) de déplacement de ladite plaque (7) ; et **en ce que** des moyens (11) se trouvent entre le piston (10) et une surface de butée (12) opposée au piston (10) afin de maintenir la plaque (7) dans ladite position de verrouillage de la broche (4) lorsque le piston (10) est désactivé.

5. Le dispositif selon la revendication 1, **caractérisé en ce que** lesdits moyens de déplacement (9) sont commandés par des moyens d'activation (13) montés à l'extérieur de la tablette (1).

6. Le dispositif selon la revendication 1, **caractérisé en ce que** ledit premier bras (2) est muni de deux broches cylindriques (4) et **en ce que** ladite plaque (7) présente deux fentes (8) correspondantes.
